# EUROPEAN PATENT APPLICATION

(11) **EP 3 040 565 A1**
(43) Date of publication of application: **06.07.2016**
(21) Application number: 14839059.4
(22) Date of filing: 20.08.2014
(51) Int. Cl.: F16C 33/38, F16C 19/16, F16C 33/44, F16C 33/66

(54) **BALL BEARING RETAINER**

(30) Priority: 30.08.2013 JP 2013179581
(71) Applicant: NTN Corporation, Osaka-shi, Osaka 550-0003 (JP)
(72) Inventor: KOYAMA, Mineo, Kuwana-shi Mie 511-8678 (JP); INOUE, Wakana, Kuwana-shi Mie 511-8678 (JP); KOSUGI, Futoshi, Kuwana-shi Mie 511-8678 (JP)
(74) Representative: Maikowski & Ninnemann Patentanwälte Partnerschaft mbB
(86) International application number: PCT/JP2014/071750
(87) International publication number: WO 2015/029851

(57) **Abstract**

A ball guide type ball bearing retainer (3) according to the present invention retains balls (4) in pockets (Pt) provided in a circular ring portion (5), and the circular ring portion (5) includes annular portions (6, 7) disposed at both sides in an axial direction and pillar portions (8) which connect the annular portions (6, 7). Each pocket (Pt) is formed by the annular portions (6, 7) at the both sides and the pillar portions (8) adjacent to each other. At outer diameter portions of the pillar portions (8), outer diameter restriction portions (9) are provided which extend toward a pocket side and restrict and guide the balls (4) from an outer diameter side with guide surfaces (9a) thereof, and are inclined flat surfaces which are inclined so as reach a large diameter side as extending from the pillar portions (8) toward a pocket (Pt) center side.

## Description

### CROSS REFERENCE TO THE RELATED APPLICATION

This application is based on and claims Convention priority to Japanese patent application No. 2013-179581, filed August 30, 2013, the entire disclosure of which is herein incorporated by reference as a part of this application.

### BACKGROUND OF THE INVENTION

### (Field of the Invention)

The present invention relates to a retainer for a ball bearing that is used for, for example, a main shaft of a machine tool or the like.

### (Description of Related Art)

A ball bearing retainer rotates while being guided by a bearing component other than the retainer, that is, an inner ring, an outer ring, or balls. Ball bearing retainers are classified into three types, "inner ring guide retainer", "outer ring guide retainer", and "ball guide retainer", on the basis of a component that guides the retainer. In general, an inner diameter restriction type ball guide retainer is often used for an angular contact ball bearing that is used for a main shaft of a machine tool or the like (Patent Documents 1, 2: inner diameter restriction type ball guide angular contact ball bearing, Patent Document 3: inner diameter restriction type ball guide retainer. An outer diameter restriction type ball guide retainer also has been proposed (Patent Document 4)).

However, an outer ring guide retainer (Patent Document 5) is often used in the case of a high-speed rotation range in which a dn value, which is the product of an inner ring inner diameter (mm) and a rotation speed (min⁻¹), exceeds about 1100 thousands. This is because, when an inner diameter restriction type ball guide retainer is rotated at a high speed, the retainer expands due to action of a centrifugal force or the retainer whirls, and thus resistance applied to a ball receiving portion (an inner diameter side portion in the case of an inner diameter restriction type) of the retainer or an amount of heat generated at the ball receiving portion, due to contact between the ball receiving portion and balls, increases gradually, thereby impairing normal rotation.

### [Related Document]

### [Patent Document]

[Patent Document 1] JP Patent No. 3611918
[Patent Document 2] JP Laid-open Patent Publication No. H09-236127
[Patent Document 3] JP Patent No. 4192515
[Patent Document 4] JP Laid-open Patent Publication No. 2006-161882
[Patent Document 5] JP Laid-open Patent Publication No. 2011-106665

Since an angular contact ball bearing that is used for a main shaft of a machine tool or the like is rotated at a high speed, a metallic retainer having a high specific gravity is less used, and a retainer made of a resin, such as nylon, PPS, PEEK, or phenolic resin, which is reinforced by glass fibers, carbon fibers, or the like is used, for such an angular contact ball bearing. Regarding the guide type thereof, in general, an inner diameter restriction type ball guide retainer is often used. However, in the case of a high-speed rotation range in which a dn value exceeds about 1100 thousands, a bearing ring guide retainer which rotates while being guided by (in contact with) an outer ring or an inner ring, which is a bearing ring, is often used.

This is because, when an inner diameter restriction type ball guide retainer is rotated at a high speed, the retainer expands due to action of a centrifugal force or the retainer whirls, and thus resistance or an amount of heat generated due to contact between a ball receiving portion of the retainer and balls increases gradually, thereby impairing normal rotation. When the normal rotation is impaired, local heat generation and insufficient lubrication occur at the contact surface, leading to an abnormal increase in the temperature of the bearing.

In a conventional outer diameter restriction type ball guide retainer, claw portions are provided on the outer diameter surface of a circular ring portion so as to extend from both side edges of each pocket in a circumferential direction toward an outer diameter side. When the retainer thermally expands, the claw portions guided by balls are separated from the balls, and thus local heat generation can be prevented. However, in the conventional retainer, since each of the claw portions is located at the center of the axial width of the pocket and greatly projects, flow of a lubricant in the pocket is not quite sufficient. In the case where the conventional retainer is used for a main shaft of a machine tool or the like and is rotated at a high speed, further improving the flow of the lubricant to further stabilize high-speed rotation is desired.

For an outer ring guide retainer, the inner diameter surface of an outer ring which guides (contacts) the retainer needs to be processed and managed to have fine surface roughness with high accuracy, and for an inner ring guide retainer, the outer diameter surface of an inner ring needs to be processed and managed to have fine surface roughness with high accuracy. Normally, these surfaces are subjected to grind finishing, which causes an increase in cost.

In the case of a ball guide retainer, the retainer is guided by (in contact with) balls which have already been managed to have fine surface roughness with high accuracy, and the inner diameter surface of an outer ring and the outer diameter surface of an inner ring do not need to be subjected to grind finishing.

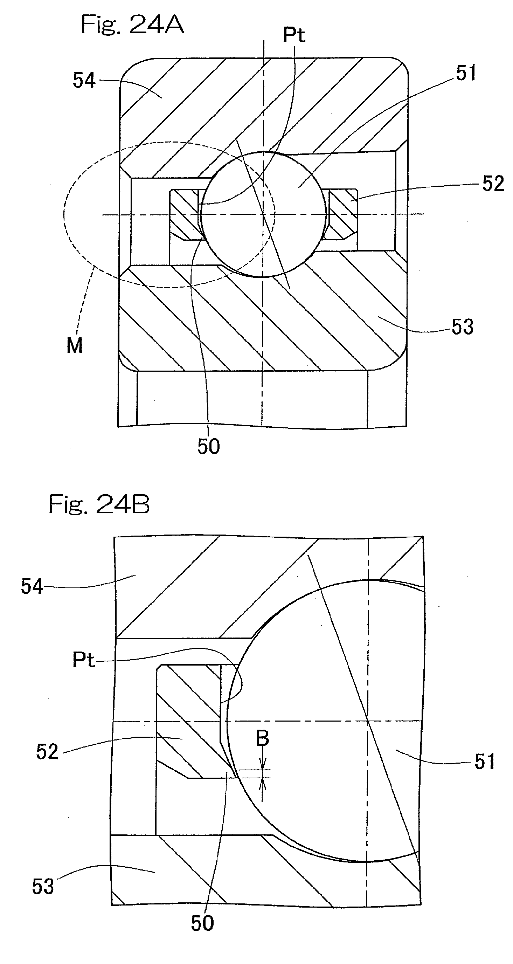

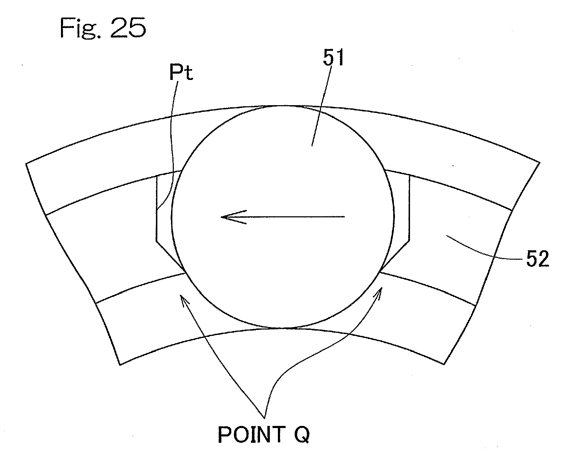

In a general inner diameter restriction type ball guide retainer, an arc-shaped pocket Pt is formed so as to extend through the retainer in a radial direction as shown in Fig. 24A. At a ball receiving portion 50 of the inner diameter restriction type retainer, a clearance B between a ball 51 and the ball receiving portion 50 is set as shown in Fig. 24B, when the position of the retainer is a neutral position. Thus, ball guiding is maintained in which, even when a retainer 52 is moved in the radial direction, the retainer 52 does not come into contact with an inner ring 53 and an outer ring 54. When the inner diameter restriction type ball guide retainer is operated at a high speed, the ball 51 and the pocket Pt are brought into contact with each other at points Q in a ball revolution direction due to expansion of the retainer 52 by a centrifugal force, whirl of the retainer 52, or the like as shown in Fig. 25, and the ball 51 sinks into the retainer pocket Pt in some cases, so that resistance or an amount of heat generated due to the contact between the ball 51 and the pocket Pt is great.

### SUMMARY OF THE INVENTION

An object of the present invention is to provide a ball bearing retainer which is a ball guide retainer but allows for stable operation even in a high-speed rotation range without local heat generation.

A ball bearing retainer according to the present invention is a ball guide type ball bearing retainer retaining balls interposed between an inner ring and an outer ring, in pockets provided in a circular ring portion and at a plurality of positions in a circumferential direction, the circular ring portion including annular portions disposed at both sides in an axial direction and pillar portions which connect the annular portions and are disposed at a plurality of positions in the circumferential direction, each pocket being formed by the annular portions at the both sides in the axial direction and the pillar portions adjacent to each other in the circumferential direction, wherein at outer diameter portions of the pillar portions, outer diameter restriction portions are provided which extend toward a pocket side and restrict and guide the balls from an outer diameter side with guide surfaces thereof, and the guide surfaces are formed as flat surfaces which are located within each of the pockets and at both sides in the circumferential direction so as to extend along the axial direction and are inclined surfaces which are inclined so as reach a large diameter side as extending from the pillar portions toward a pocket center side, as seen from the axial direction of the retainer.

According to this configuration, the retainer is configured as an outer diameter restriction type by providing, at the outer diameter portions of the pillar portions, the outer diameter restriction portions which restrict and guide the balls from the outer diameter side with the guide surfaces. Thus, unlike an inner diameter restriction type, even when a centrifugal force acts on the retainer during operation in a high-speed rotation range, the retainer expands to the outer diameter side without interfering with the balls. A portion of the retainer is not tightly fitted onto the ball as described above, and thus local heat generation caused due to contact between the retainer and the ball can be avoided.

In particular, since the guide surfaces of the outer diameter restriction portions are formed as flat surfaces which are located within each pocket at both sides in the circumferential direction so as to extend along the axial direction, a lubricant can easily reach the guide surfaces to reduce an amount of heat generated. Furthermore, since the guide surfaces are formed as inclined surfaces which are inclined so as to reach the large diameter side as extending from the pillar portions to the center side of each pocket as seen from the axial direction of the retainer, the lubricant supplied to the guide surfaces can be moved along the inclined surfaces to the center side of the pocket by a centrifugal force. Since the lubricant can easily reach the guide surfaces and the lubricant supplied to the guide surfaces can be removed smoothly without being caused to remain thereon as described above, the amount of heat generated at the guide surface can be further reduced, and thus stable operation in the high-speed rotation range is enabled. In addition, due to ball guide type, it is not necessary to subject the inner diameter surface of the outer ring or the outer diameter surface of the inner ring to grind finishing, and thus processing man-hours can be reduced.

Meanwhile, there is an outer diameter restriction type ball guide retainer (Patent Document 4) as a rolling element guide retainer, and for a molded retainer which is advantageous in mass productivity, a method in which mold parts having a shape corresponding to the shape of a retainer pocket portion are pulled toward the radially outer direction is the mainstream. This method is a method of utilizing elastic deformation of a resin to force the mold parts to be pulled. This case has the following demerit. A space for allowing an elastically deformable portion of the resin to escape is needed at the back side of a ball guiding portion. Due to the space, the interval between the adjacent balls increases. As a result, the number of the balls decreases, so that the load capacity decreases.

Even with a mold employing a demolding method in which mold parts having a shape corresponding to the shape of a retainer pocket portion is slid toward the radially inner direction, the slide parts gather at the inner diameter side. Thus, each interval between the balls needs to be wide. As a result, the number of the balls decreases, so that the load capacity decreases.

Patent Document 3 discloses an example of pulling a mold in an axial direction. Getting the idea from the shape of the mold, the molded product is an inner diameter restriction type ball guide retainer, and the demerit for the inner diameter restriction type retainer is the same as described above.

In the present invention, in the circular ring portion, the annular portion at one side in the axial direction may be disposed at a position larger in diameter than the annular portion at the other side in the axial direction, and each outer diameter restriction portion may be provided so as to extend over the pillar portion and the annular portion at the one side in the axial direction. Since the annular portion at the one side in the axial direction is disposed at a position larger in diameter than the annular portion at the other side in the axial direction, a demolding method can be adopted in which the mold is slid in an axial direction. Since the demolding method in which the mold is slid in the axial direction can be adopted even though the retainer is of an outer diameter restriction type, it is not necessary to utilize elastic deformation of a resin, so that concentration of stress on a portion of the retainer can be avoided. In this case, it is not necessary to ensure a space for allowing an elastically deformable portion of the resin to escape, at the back side of a ball guiding portion as in the conventional art, so that it is possible to reduce the interval between the adjacent balls. As a result, the number of the balls can be increased, and thus it is possible to increase the load capacity. In addition, since it is not necessary to utilize elastic deformation of the resin, the number of choices for the usable retainer material increases.

In the ball bearing retainer, the annular portion at the one side in the axial direction may include: a flat surface portion connected to the pillar portions within each of the pockets; an inner peripheral portion continuous at an inner peripheral side from the flat surface portion; and a connection portion which connects the inner peripheral portion and the flat surface portion and is formed as an R portion which is roundly chamfered, and the annular portion at the one side in the axial direction may be guided by each ball at the connection portion, which is the R portion, or the flat surface portion. In this case, each ball, in point contact or line contact with the annular portion at the one side in the axial direction, can guide the retainer. Thus, an amount of heat generated can be reduced as compared to, for example, a ball bearing retainer that is guided by each ball in surface contact with an arc-shaped surface.

In the ball bearing retainer, the annular portion at the other side in the axial direction may include a flat surface portion connected to the pillar portions within each of the pockets and an outer peripheral portion which is continuous at an outer peripheral side from the flat surface portion and has a diameter larger than a pitch circle diameter of the balls, and the annular portion at the other side in the axial direction may be guided by each ball at the flat surface portion. In this case, each ball, in point contact with the annular portion at the other side in the axial direction, can guide the retainer. Thus, an amount of heat generated can be reduced as compared to, for example, a ball bearing retainer that is guided by each ball in surface contact with an arc-shaped surface.

Any ball bearing retainer according to the present invention may be a retainer for an angular contact ball bearing and may be made of a resin. The ball bearing retainer made of the resin may be produced by injection molding. In addition, the present invention may be an angular contact ball bearing, for a main shaft of a machine tool, in which any ball bearing retainer according to the present invention is used.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal cross-sectional view of an angular contact ball bearing in which a ball bearing retainer according to a first embodiment of the invention is used;
Fig. 2 is a plan view of the ball bearing retainer as seen from the outer diameter side;
Fig. 3 is a side view of the ball bearing retainer as seen from the other side in an axial direction;
Fig. 4 is a view of the ball bearing retainer as seen from the inner diameter side;
Fig. 5 is a perspective view of the ball bearing retainer as seen from the other side in the axial direction;
Fig. 6 is a longitudinal cross-sectional view schematically showing a mold which molds the ball bearing retainer;
Fig. 7 is a longitudinal cross-sectional view of an angular contact ball bearing in which a ball bearing retainer according to Proposed Reference Example 1 is used;
Fig. 8 is a plan view of a main portion of the ball bearing retainer;
Fig. 9 is a longitudinal cross-sectional view showing a relationship between the ball bearing retainer and a ball during operation in a high-speed rotation range;
Fig. 10 is a plan view of a main portion of a ball bearing retainer according to Proposed Reference Example 2 in which the entire periphery of a pocket has a tapered shape;
Fig. 11 is a cross-sectional view taken along a line XI-XI in Fig. 10;
Fig. 12 is a cross-sectional view taken along a line XII-XII in Fig. 10;
Fig. 13 is a plan view of a main portion of a ball bearing retainer according to Proposed Reference Example 3 in which only axially-opposed portions of a pocket are provided with a tapered shape;
Fig. 14 is a cross-sectional view taken along a line XIV-XIV in Fig. 13;
Fig. 15 is a cross-sectional view taken along a line XV-XV in Fig. 13;
Fig. 16 is a perspective view of the ball bearing retainer;
Fig. 17 is a plan view of a main portion of a ball bearing retainer according to Proposed Reference Example 4;
Fig. 18 is a cross-sectional view taken along a line XVIII-XVIII in Fig. 17;
Fig. 19 is a cross-sectional view taken along a line XIX-XIX in Fig. 17;
Fig. 20 is a perspective view of the ball bearing retainer;
Fig. 21 is a plan view of a main portion of a ball bearing retainer according to Proposed Reference Example 5;
Fig. 22 is a cross-sectional view taken along a line XXII-XXII in Fig. 21;
Fig. 23 is a cross-sectional view taken along a line XXIII-XXIII in Fig. 21;
Fig. 24A is a longitudinal cross-sectional view of a conventional ball bearing;
Fig. 24B is an enlarged cross-sectional view of a portion M in Fig. 24A; and
Fig. 25 is a side view of a main portion of the conventional ball bearing retainer.

### DESCRIPTION OF EMBODIMENTS

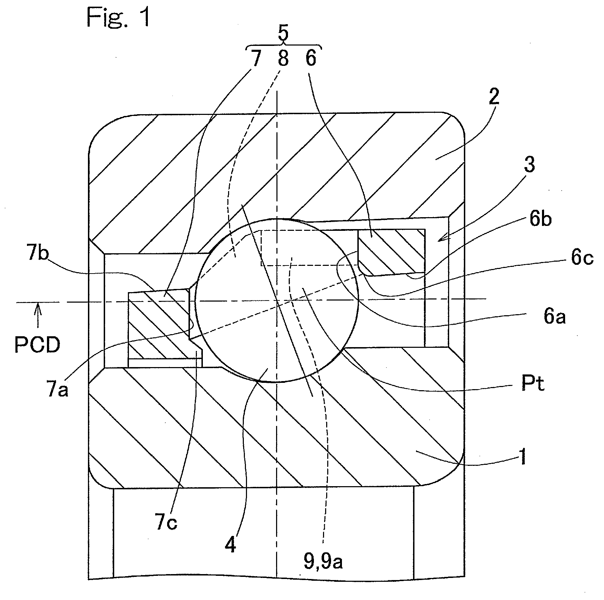

A first embodiment of the present invention will be described with reference to Figs. 1 to 6. A ball bearing retainer according to this embodiment is applied particularly to a retainer of an angular contact ball bearing for a main shaft of a machine tool. Fig. 1 is a longitudinal cross-sectional view of an angular contact ball bearing in which the ball bearing retainer is used. In the angular contact ball bearing, balls 4 are retained by a retainer 3 and interposed between an inner ring 1 and an outer ring 2. The balls 4 are formed of, for example, steel balls, ceramics, or the like.

The retainer 3 is an outer diameter restriction type ball guide retainer. The retainer 3 retains the balls 4, which are interposed between the inner ring 1 and the outer ring 2, in pockets Pt which are provided in a circular ring portion 5 and at a plurality of positions in a circumferential direction. The circular ring portion 5 includes: annular portions 6 and 7 disposed at both sides in an axial direction; and pillar portions 8 which connect the annular portions 6 and 7 and are disposed at a plurality of positions in the circumferential direction. Each of the pockets Pt is formed by the annular portions 6 and 7 at both sides in the axial direction and the pillar portions 8 that are adjacent to each other in the circumferential direction. In the circular ring portion 5, the annular portion 6 at one side in the axial direction is disposed at a position larger in diameter than the annular portion 7 at the other side in the axial direction, and each pillar portion 8 is formed in a shape in which the pillar portion 8 is inclined so as to reach the inner diameter side as extending from the annular portion 6 at the one side toward the annular portion 7 at the other side.

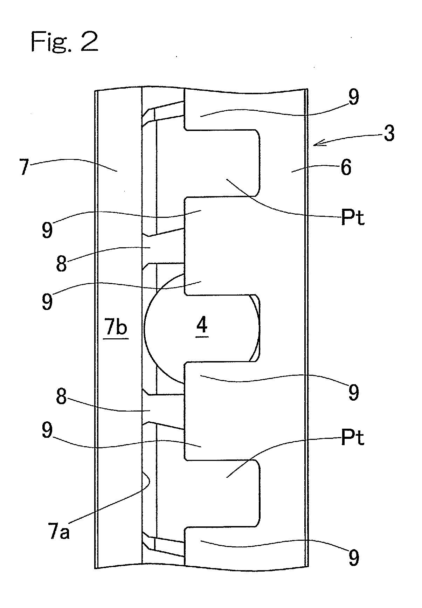

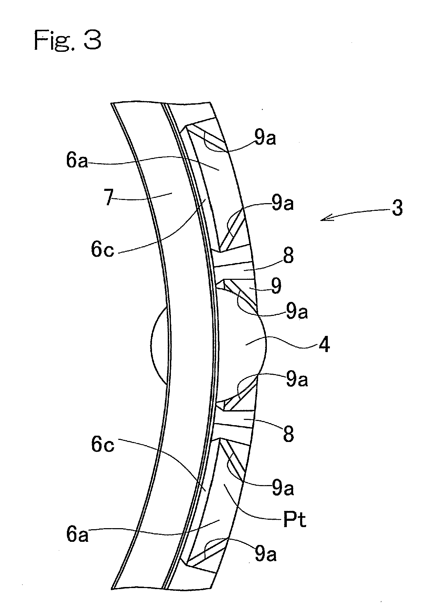

Fig. 2 is a plan view of the retainer 3 as seen from the outer diameter side, and Fig. 3 is a side view of the retainer 3 as seen from the other side in the axial direction. As shown in Figs. 2 and 3, outer diameter restriction portions 9 are provided at an outer diameter portion of each pillar portion 8. Each outer diameter restriction portion 9 extends from the pillar portion 8 toward the pocket side and restricts and guides the ball 4 from the outer diameter side with a guide surface 9a.

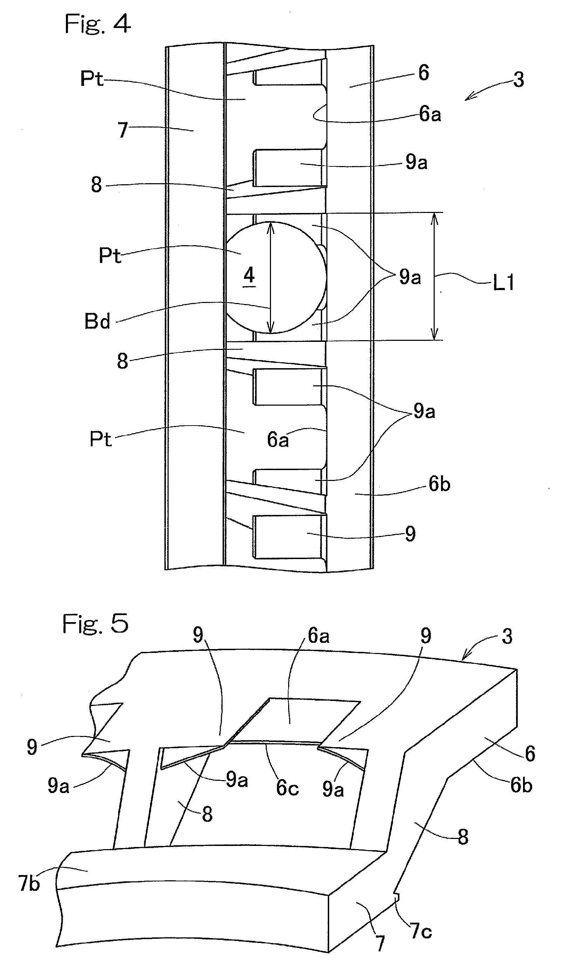

Fig. 4 is a view of the retainer 3 as seen from the inner diameter side. As shown in Fig. 4, the guide surfaces 9a of the outer diameter restriction portions 9 are formed as flat surfaces which are located within each pocket Pt and at both sides in the circumferential direction so as to extend in the axial direction. The guide surfaces 9a at both sides in the circumferential direction within each pocket Pt are guided in a rotation direction by the ball 4. In one pocket Pt, of both guide surfaces 9a guided in the rotation direction, a length L1 from a proximal end of one guide surface 9a which proximal end is connected to the pillar portion 8 to a proximal end of the other guide surface 9a which proximal end is connected to the pillar portion 8, is set so as to be slightly longer than a ball diameter Bd.

Fig. 5 is a perspective view of the retainer 3 as seen from the other side in the axial direction. As shown in Figs. 3 and 5, the guide surface 9a of each outer diameter restriction portion 9 is formed as an inclined surface which is inclined so as to reach the large diameter side as extending from the pillar portion 8 toward the center side of the pocket, as seen from the other side in the axial direction of the retainer 3. Each outer diameter restriction portion 9 is formed integrally with the pillar portion 8 and the annular portion 6 at the one side in the axial direction.

As shown in Figs. 1 and 3, the annular portion 6 at the one side in the axial direction includes a flat surface portion 6a connected to the pillar portions 8 within each pocket. As shown in Fig. 1, the annular portion 6 at the one side in the axial direction includes an inner peripheral portion 6b continuous at the inner peripheral side from the flat surface portion 6a; and a connection portion 6c which connects the inner peripheral portion 6b and the flat surface portion 6a and is formed as an R portion which is roundly chamfered. The annular portion 6 at the one side in the axial direction is configured to be guided by each ball 4 at the connection portion 6c, which is the R portion, or the flat surface portion 6a.

As shown in Fig. 1, the annular portion 7 at the other side in the axial direction includes a flat surface portion 7a connected to the pillar portions 8 within each pocket Pt; and an outer peripheral portion 7b which is continuous at the outer peripheral side from the flat surface portion 7a and has a diameter larger than a pitch circle diameter PCD of the balls 4. The annular portion 7 at the other side in the axial direction is guided by each ball 4 at the flat surface portion 7a. In addition, the annular portion 7 at the other side in the axial direction is provided with an annular projection 7c extending to the inner peripheral portion of the flat surface portion 7a. The annular projection 7c is formed in a cross-sectional shape which is inclined so as to reach the center side in the axial direction as extending toward the inner diameter side.

The retainer 3 is made of a resin, such as nylon, PPS, PEEK, or phenolic resin, which is reinforced by glass fibers, carbon fibers, or the like. The retainer 3 is produced by injection molding. However, the material of the retainer 3 is not limited to the above resin material.

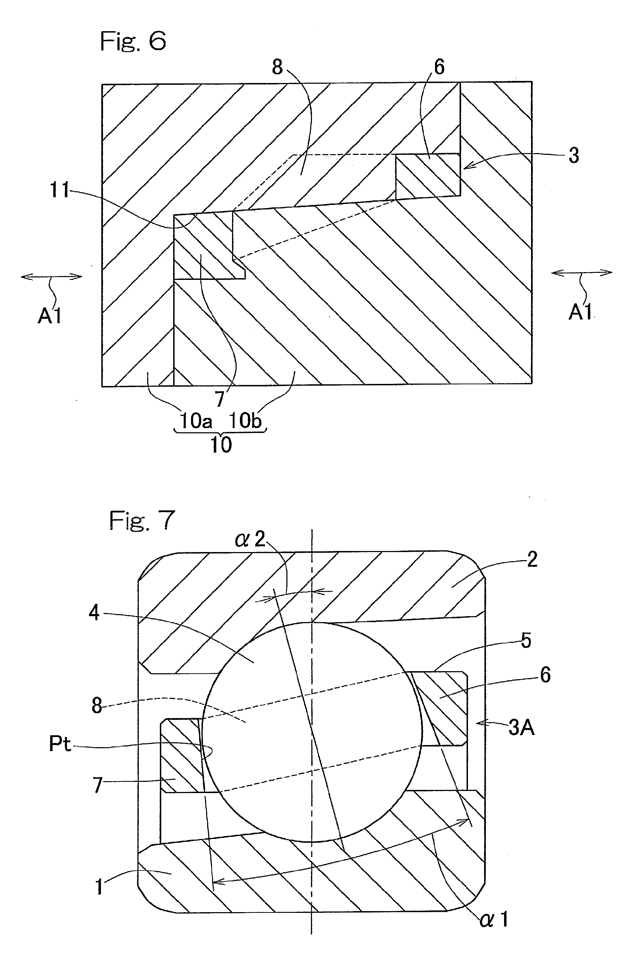

Fig. 6 is a longitudinal cross-sectional view schematically showing a mold 10 which molds the retainer 3 by injection molding. As shown in Fig. 6, the mold 10 is configured by combining mold parts 10a and 10b each having a substantially L shaped cross section. The mold parts 10a and 10b are configured to be slidable relative to each other in an axial direction A1. In a state where the mold parts 10a and 10b are combined, a cavity 11 which is to be filled with the above resin material is formed. After the retainer 3 is molded into a desired shape, the mold parts 10a and 10b are moved away from each other in the axial direction A1 and the retainer 3 is taken out from the mold 10.

Advantageous effects will be described. As shown in Fig. 1, the retainer 3 is configured as an outer diameter restriction type by providing, at the outer diameter portions of the pillar portions 8, the outer diameter restriction portions 9 which restrict and guide the balls 4 from the outer diameter side with the guide surfaces 9a. Thus, unlike an inner diameter restriction type, even when a centrifugal force acts on the retainer 3 during operation in a high-speed rotation range, the retainer 3 expands to the outer diameter side without interfering with the balls 4. A portion of the retainer 3 is not tightly fitted onto the ball 4 as described above, and thus local heat generation caused due to contact between the retainer 3 and the ball 4 can be avoided.

In particular, since the guide surfaces 9a of the outer diameter restriction portions 9 are formed as flat surfaces which are located within each pocket Pt at both sides in the circumferential direction so as to extend along the axial direction, a lubricant can easily reach the guide surfaces 9a to reduce an amount of heat generated. Furthermore, since the guide surfaces 9a are formed as inclined surfaces which are inclined so as to reach the large diameter side as extending from the pillar portions 8 to the center side of each pocket Pt as seen from the axial direction of the retainer 3, the lubricant supplied to the guide surfaces 9a can be moved along the inclined surfaces to the center side of the pocket Pt by a centrifugal force. Since the lubricant can easily reach the guide surfaces 9a and the lubricant supplied to the guide surfaces 9a can be removed smoothly without being caused to remain thereon as described above, the amount of heat generated at the guide surface 9a can be further reduced, and thus stable high-speed operation is enabled. In addition, due to ball guide type, it is not necessary to subject the inner diameter surface of the outer ring or the outer diameter surface of the inner ring to grind finishing, and thus processing man-hours can be reduced.

Since the annular portion 6 at the one side in the axial direction is disposed at a position larger in diameter than the annular portion 7 at the other side in the axial direction, a demolding method can be adopted in which, as shown in Fig. 6, the mold 10 is slid in the axial direction A1 during molding of the retainer 3. Since the demolding method in which the mold 10 is slid in the axial direction can be adopted even though the retainer 3 is of an outer diameter restriction type, it is not necessary to utilize elastic deformation of the resin, so that concentration of stress on a portion of the retainer 3 when the mold 10 is opened can be avoided. In this case, it is not necessary to ensure a space for allowing an elastically deformable portion of the resin to escape, at the back side of a ball guiding portion as in the conventional art, so that it is possible to reduce the interval between the adjacent balls. As a result, the number of the balls can be increased, and thus it is possible to increase the load capacity. In addition, since it is not necessary to utilize elastic deformation of the resin, the number of choices for the usable retainer material increases.

Since the annular portion 6 at the one side in the axial direction is guided by each ball 4 at the connection portion 6c, which is the R portion, or the flat surface portion 6a, each ball 4, in point contact or line contact with the annular portion 6 at the one side in the axial direction, can guide the retainer 3. Thus, an amount of heat generated can be reduced as compared to, for example, a ball bearing retainer that is guided by each ball 4 in surface contact with an arc-shaped surface. In addition, the annular portion 7 at the other side in the axial direction includes the flat surface portion 7a connected to the pillar portions 8 within each pocket and the outer peripheral portion 7b which is continuous at the outer peripheral side from the flat surface portion 7a and has a diameter larger than the pitch circle diameter PCD of the balls 4, and the annular portion 7 at the other side in the axial direction is guided by each ball 4 at the flat surface portion 7a. Thus, each ball 4, in point contact with the annular portion 7 at the other side in the axial direction, can guide the retainer 3, and thus, an amount of heat generated can be reduced as compared to, for example, a ball bearing retainer that is guided by each ball in surface contact with an arc-shaped surface.

Hereinafter, ball bearing retainers according to Proposed Reference Examples 1 to 5 which are of a ball guide type but allow for high-speed operation will be described with reference to Figs. 7 to 23.

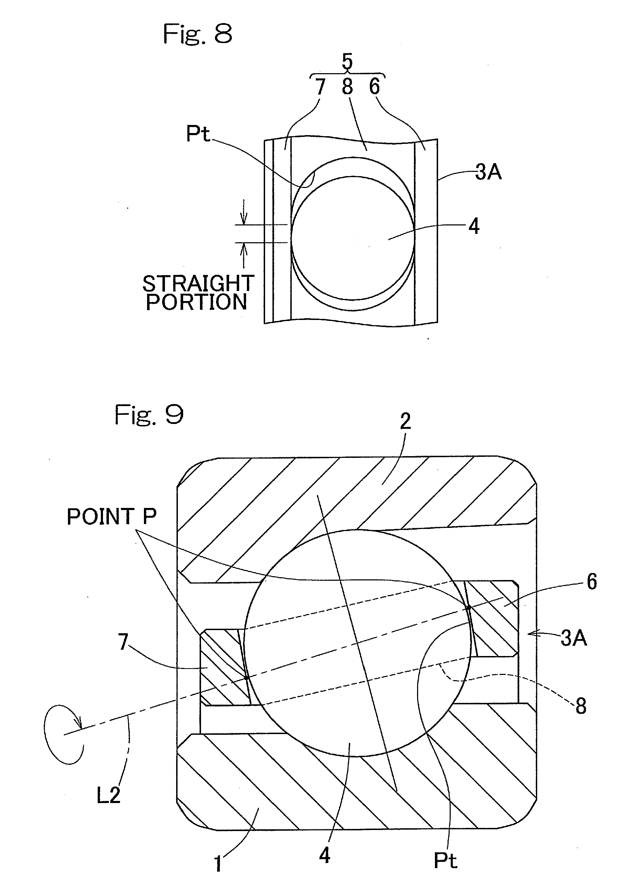

Fig. 7 is a longitudinal cross-sectional view of an angular contact ball bearing in which a ball bearing retainer 3A according to Proposed Reference Example 1 is used, and Fig. 8 is a plan view of a main portion of the ball bearing retainer 3A. Fig. 9 is a longitudinal cross-sectional view showing a relationship between the ball bearing retainer 3A and the ball 4 during operation in a high-speed rotation range. As shown in Figs. 7 and 8, the retainer 3A is a ball guide retainer, and, in the circular ring portion 5, the annular portion 6 at the one side in the axial direction is disposed at a position larger in diameter than the annular portion 7 at the other side in the axial direction. The pillar portions 8 connect the annular portions 6 and 7 and are disposed at a plurality of positons in the circumferential direction. Each pillar portion 8 is formed in a shape in which the pillar portion 8 is inclined so as to reach the inner diameter side as extending from the annular portion 6 at the one side toward the annular portion 7 at the other side.

In the retainer 3A, each of the pockets Pt provided in the circular ring portion 5 and at a plurality of positions in the circumferential direction has a tapered portion decreased toward the large diameter side, which has an angle of about 5° to 10° and a length of about 1 to 2 mm and retains the ball 4, and each pocket Pt is opened at an inclination angle α2. The pocket inclination angle α2 is an angle approximated to a contact angle of the angular contact ball bearing. As both angles are more approximated to each other, the peripheral speed at each point P described later decreases. The tapered shape of each pocket Pt is laterally symmetrical in a revolution direction of the ball 4 with, as a center line, an axis having the pocket inclination angle α2, and an opening angle of each pocket Pt is α1. The size of each pocket Pt is longer in the circumferential direction than in the axial direction by about 0.2 to 0.6 mm. The pocket diameter is such a diameter that the retainer 3A does not come into contact with a bearing ring such as the inner ring 1 or the outer ring 2 even when the retainer 3A is moved in the radial direction, that is, the retainer 3A is configured as a ball guide type.

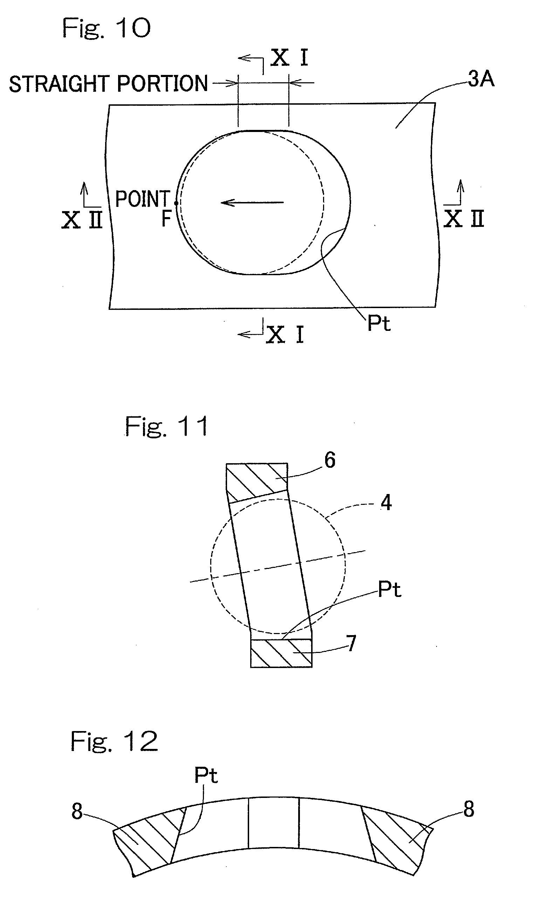

As shown in Fig. 9, when the bearing which supports a main shaft rotates at a high speed, if the ball 4 sinks into the pocket Pt due to expansion of the retainer 3A by a centrifugal force, whirl of the retainer 3A, or the like, the ball 4 contacts the pocket Pt at the points P most strongly. The peripheral speed at each point P caused by ball rotation decreases as the distance between a ball rotation axis L2 and each point P decreases. The ball 4 rotates in contact with the pocket Pt at a point F in a revolution advance direction (Fig. 10). However, since the pocket dimension is longer in the circumferential direction, even if the ball 4 sinks into the pocket Pt, the ball 4 does not receive a great restriction force at the point F (Fig. 10).

Figs. 10 to 23 show specific retainer shapes. Fig. 10 is a plan view of a main portion of a ball bearing retainer according to Proposed Reference Example 2 in which the entire periphery of a pocket has a tapered shape. Fig. 11 is a cross-sectional view of the ball bearing retainer taken along a line XI-XI, and Fig. 12 is a cross-sectional view of the ball bearing retainer taken along a line XII-XII. With the configuration of the retainer 3A according to Proposed Reference Example 2, the following advantageous effects are exerted (the same applies to the following proposed reference examples). The ball 4 rotates in contact with the pocket Pt at the point F in the revolution advance direction. However, since the pocket dimension is longer in the circumferential direction, even if the ball 4 sinks into the pocket Pt, the ball 4 does not receive a great restriction force at the point F. That is, in a high-speed rotation range, the peripheral speed of the ball 4 with respect to the retainer 3A according to the proposed example at the strong contact points P is smaller than the peripheral speed of the ball 51 with respect to the conventional retainer 52 at the strong contact points Q, so that rotation at a higher speed than in the conventional art is enabled even though the retainer is a ball guide retainer. Here, the above P means the points P shown in Fig. 9, and the above Q means the points Q in Fig. 25.

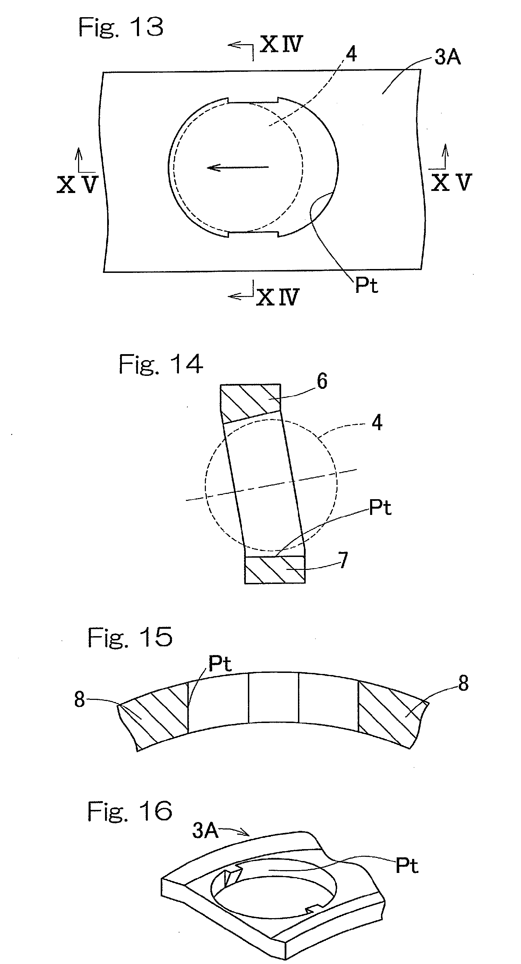

Fig. 13 is a plan view of a main portion of a ball bearing retainer according to Proposed Reference Example 3 in which only axially-opposed portions of the pocket Pt are provided with a tapered shape. Fig. 14 is a cross-sectional view of the ball bearing retainer taken along a line XIV-XIV, and Fig. 15 is a cross-sectional view of the ball bearing retainer taken along a line XV-XV. Fig. 16 is a perspective view of the ball bearing retainer. As shown in Figs. 13 to 16, only the axially-opposed portions of the pocket Pt of the retainer 3A may be provided with a tapered shape, and the other pocket surface may be a surface parallel to an axis passing through the retainer center and the pocket center.

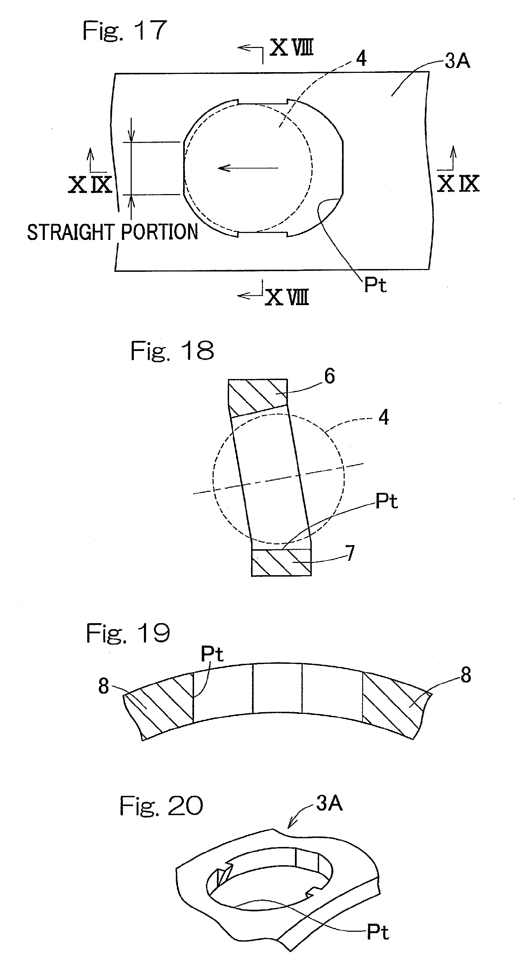

As in Proposed Reference Example 4 shown in Figs. 17 to 20, in the retainer 3 in which only the axially-opposed portions of the pocket of the retainer 3A are provided with a tapered shape, contact surfaces of the ball 4 and the pocket Pt which face to the ball revolution direction may be flat surfaces (straight portions). The width of each of the flat surfaces is, for example, about 1 to 2 mm.

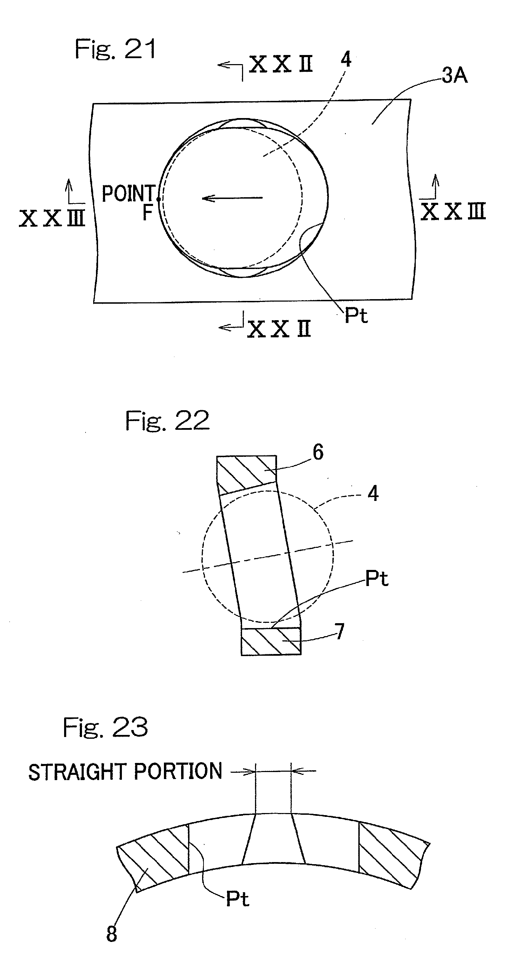

As in Proposed Reference Example 5 shown in Figs. 21 to 23, the flat surfaces of the ball receiving portion at both sides in the axial direction in Proposed Reference Example 3 shown in Figs. 13 to 16 may be not projection portions and may be formed as continuous surfaces. Similarly, in Proposed Reference Example 4 in Figs. 17 to 20, the flat surfaces of the ball receiving portion at both sides in the axial direction may be formed as continuous surfaces.

In the case of any of Proposed Reference Examples 1 to 5 described above, the longitudinal cross-sectional shape of the retainer may be a rectangular that is longer in the axial direction than in the radial direction, or may be a stepped shape in which the retainer diameter dimension is different at the left side and the right side of each pocket with respect to the ball revolution direction, if the ball guide design does not have any allowance in dimensional limitations (if the clearance between the retainer and the inner diameter portion of the outer ring and the clearance between the retainer and the outer diameter portion of the inner ring do not have any allowances).

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: inner ring
- 2: outer ring
- 3, 3A: retainer
- 4: ball
- 5: circular ring portion
- 6, 7: annular portion
- 6a: flat surface portion
- 6b: inner peripheral portion
- 6c: connection portion (R portion)
- 7a: flat surface portion
- 7b: outer peripheral portion
- 8: pillar portion
- 9: outer diameter restriction portion
- 9a: guide surface
- Pt: pocket

## Claims

1. A ball guide type ball bearing retainer retaining balls interposed between an inner ring and an outer ring, in pockets provided in a circular ring portion and at a plurality of positions in a circumferential direction, the circular ring portion including annular portions disposed at both sides in an axial direction and pillar portions which connect the annular portions and are disposed at a plurality of positions in the circumferential direction, each pocket being formed by the annular portions at the both sides in the axial direction and the pillar portions adjacent to each other in the circumferential direction, wherein
at outer diameter portions of the pillar portions, outer diameter restriction portions are provided which extend toward a pocket side and restrict and guide the balls from an outer diameter side with guide surfaces thereof, and
the guide surfaces are formed as flat surfaces which are located within each of the pockets and at both sides in the circumferential direction so as to extend along the axial direction and are inclined surfaces which are inclined so as reach a large diameter side as extending from the pillar portions toward a pocket center side, as seen from the axial direction of the retainer.

2. The ball bearing retainer as claimed in claim 1, wherein
in the circular ring portion, the annular portion at one side in the axial direction is disposed at a position larger in diameter than the annular portion at the other side in the axial direction, and
each outer diameter restriction portion is provided so as to extend over the pillar portion and the annular portion at the one side in the axial direction.

3. The ball bearing retainer as claimed in claim 2, wherein
the annular portion at the one side in the axial direction includes: a flat surface portion connected to the pillar portions within each of the pockets; an inner peripheral portion continuous at an inner peripheral side from the flat surface portion; and a connection portion which connects the inner peripheral portion and the flat surface portion and is formed as an R portion which is roundly chamfered, and
the annular portion at the one side in the axial direction is guided by each ball at the connection portion, which is the R portion, or the flat surface portion.

4. The ball bearing retainer as claimed in claim 2 or 3, wherein
the annular portion at the other side in the axial direction includes a flat surface portion connected to the pillar portions within each of the pockets and an outer peripheral portion which is continuous at an outer peripheral side from the flat surface portion and has a diameter larger than a pitch circle diameter of the balls, and
the annular portion at the other side in the axial direction is guided by each ball at the flat surface portion.

5. The ball bearing retainer as claimed in any one of claims 1 to 4, wherein the ball bearing retainer is a retainer for an angular contact ball bearing.

6. The ball bearing retainer as claimed in any one of claims 1 to 5, wherein the ball bearing retainer is made of a resin.

7. The ball bearing retainer as claimed in claim 6, wherein the ball bearing retainer is produced by injection molding.

8. An angular contact ball bearing for a main shaft of a machine tool, wherein the ball bearing retainer as claimed in any one of claims 1 to 7 is used.
